# FASCICULE DE BREVET EUROPEEN

(11) **EP 1 255 673 B1**
(45) Date de publication et mention de la délivrance du brevet: **02.11.2006**
(21) Numéro de dépôt: 01907770.0
(22) Date de dépôt: 13.02.2001
(51) Int. Cl.: B64C 39/02, B64C 27/20

(54) **ENGIN VOLANT TELECOMMANDE, EN PARTICULIER DE SURVEILLANCE OU D'INSPECTION**
RPV, INSBESONDERE ZUR ÜBERWACHUNG ODER UNTERSUCHUNG
REMOTE-CONTROLLED FLYING MACHINE, IN PARTICULAR FOR SURVEILLANCE OR INSPECTION

(30) Priorité: 15.02.2000 FR 0001923
(43) Date de publication de la demande: 13.11.2002
(73) Titulaire: Bertin Technologies, 75008 Paris (FR)
(72) Inventeur: LEPRETRE, Marc, F-92270 Bois Colombes (FR); CHASTANG, Georges, F-78370 Coignières (FR)
(74) Mandataire: Ramey, Daniel
(86) Numéro de dépôt international: PCT/FR2001/000405
(87) Numéro de publication internationale: WO 2001/060692

(56) Documents cités:
- EP-A- 0 279 391
- FR-A- 2 749 901
- US-A- 3 217 097

## Description

L'invention concerne un engin volant télécommandé ou « drone », destiné en particulier à des taches de surveillance ou d'inspection, par exemple d'ouvrages d'art, de câbles suspendus, de lignes électriques à haute tension, d'équipements nucléaires, etc.

Un engin de ce type est en général équipé de moyens d'observation et de détection, notamment d'une caméra pour l'obtention d'images des zones survolées, permettant d'une part une inspection visuelle de ces zones et d'autre part un pilotage à vue depuis l'engin, et d'une hélice ou d'un rotor à axe vertical, permettant un décollage vertical et un vol stationnaire.

Il a déjà été proposé de monter l'hélice dans un carénage cylindrique, ce qui permet de diminuer légèrement les dimensions de l'hélice pour une même poussée et de réduire les risques de choc de l'hélice en rotation sur des objets environnants ou des personnes.

Le document US-A-3217097 décrit un engin volant relié par un câble d'alimentation à un véhicule au sol, cet engin volant comprenant une hélice tournant dans un carénage et une enveloppe extérieure en forme de demi-ellipse ou de demi-ogive, qui s'étend sous le carénage et est reliée par son point le plus bas au câble d'alimentation. Un tel engin n'est pas autonome et ne peut se poser au sol puis redécoller.

Le document EP 0 279 391 décrit un engin volant du même genre télécommandé par liaison radio, l'engin ayant essentiellement la forme d'un cylindre ou d'un disque.

L'invention a pour but d'apporter des perfectionnements importants à ce type d'engin volant, permettant son utilisation en toute sécurité et une amélioration notable de ses performances et possibilités d'emploi.

L'invention a également pour but de réaliser un engin de ce type, qui puisse décoller et se poser sensiblement à la verticale, voler comme un avion et faire du vol stationnaire.

Elle propose à cet effet un engin volant télécommandé par liaison radio, équipé de moyens d'observation et/ou de détection, d'une hélice à axe vertical tournant à l'intérieur d'un carénage sensiblement cylindrique et d'un moteur d'entraînement de l'hélice, caractérisé en ce que le centre de gravité de l'engin volant est situé en dessous de son centre géométrique et au dessus de son centre de poussée aérodynamique et en ce que l'ensemble comprenant les moyens de détection et/ou d'observation, le moteur et l'hélice est entouré d'une enveloppe extérieure sensiblement sphérique ajourée et solidaire du carénage.

Grâce à ces caractéristiques, l'engin volant selon l'invention peut occuper une position stable au sol, dans laquelle l'axe de l'hélice est sensiblement vertical. Il peut décoller verticalement, se poser au sol en étant ramené automatiquement dans cette position stable, et redécoller verticalement. De plus, en cas de choc de l'engin volant sur un obstacle, l'enveloppe extérieure protège l'engin volant de toute détérioration et, réciproquement, protège l'obstacle heurté par l'engin volant.

Avantageusement, cette enveloppe extérieure est réalisée en au moins un matériau léger et résistant aux chocs.

Dans un mode de réalisation de l'invention, au moins une partie de l'enveloppe est formée d'une seule pièce avec le carénage et est de préférence en une matière plastique cellulaire à cellules fermées, telle par exemple qu'une mousse de polyéthylène.

En variante, ladite enveloppe est au moins en partie métallique et comprend un treillis ou un grillage qui est fixé ou accroché sur le carénage.

Selon encore une autre caractéristique de l'invention, l'engin volant comprend un fuselage axial dont une partie arrière contient le moteur et les moyens d'observation et/ou de détection, et des aubages redresseurs, s'étendant derrière l'hélice entre le carénage et le fuselage axial, pour empêcher une rotation de l'engin volant autour de l'axe de l'hélice. Dans une réalisation particulièrement simple de l'invention, ces aubages redresseurs sont fixes. Dans une variante de réalisation plus sophistiquée et plus coûteuse, ces aubages sont orientables autour d'un axe perpendiculaire à l'axe de l'hélice et sont commandés par des servo-moteurs.

Selon une autre caractéristique de l'invention, cet engin volant comprend également des gouvernes formées par des volets ou des ailerons qui s'étendent en partie arrière de l'engin volant, entre le fuselage et ladite enveloppe et qui sont orientables autour d'axes perpendiculaires à l'axe de l'hélice pour diriger l'engin par rotation autour de ses axes de tangage, de lacet et/ou de roulis.

Un circuit de commande comprenant un microcalculateur et éventuellement au moins un gyroscope permet d'élaborer des consignes de régime moteur et de position des aubages redresseurs et/ou des gouvernes en fonction des ordres donnés par un opérateur (par exemple monter ou descendre, avancer, tourner à gauche ou à droite, reculer).

Dans une première forme de réalisation, cet engin volant est équipé d'un moteur électrique et d'accumulateurs électriques, ces derniers étant disposés à l'intérieur du fuselage axial ou portés par le carénage.

Dans une autre forme de réalisation, cet engin volant est équipé d'un moteur thermique et d'un réservoir de carburant, ce dernier étant disposé à l'intérieur du fuselage axial ou porté par le carénage.

L'invention prévoit également des moyens de stabilisation dynamique de l'engin volant en mouvement transitoire, comprenant une masse mobile d'équilibrage qui est montée en pendule inversé sur l'axe de l'hélice, en avant de celle-ci. Des moyens élastiquement déformables de rappel et des moyens d'amortissement du déplacement sont associés à cette masse mobile.

Les déplacements de cette masse mobile d'équilibrage sont en opposition de phase avec les dérives angulaires de l'engin volant par rapport à une trajectoire souhaitée et permettent de les limiter et de les ralentir suffisamment pour qu'on puisse les corriger, manuellement ou automatiquement.

Les moyens de stabilisation peuvent être passifs ou actifs. Dans ce dernier cas, ils sont associés à des servo-moteurs qui peuvent être commandés soit par un opérateur, soit automatiquement par exemple au moyen d'une plate-forme inertielle embarquée ou d'un système de traitement d'images déporté, permettant d'obtenir des références, notamment verticales, à partir d'images transmises par les moyens d'observation de l'engin volant.

Les dimensions de l'engin volant selon l'invention peuvent varier dans une large mesure en fonction des tâches auxquelles il est destiné. Sa conception permet de le réaliser avec des moyens simples et disponibles dans le commerce, pour un coût relativement faible.

L'invention sera mieux comprise, et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un engin volant selon l'invention ;
- la figure 2 est une vue schématique en coupe axiale d'une variante de réalisation de cet engin volant ;
- la figure 3 représente schématiquement des moyens d'actionnement des gouvernes ;
- les figures 4 à 7 sont des vues schématiques en coupe axiale de variantes de réalisation de l'engin volant.

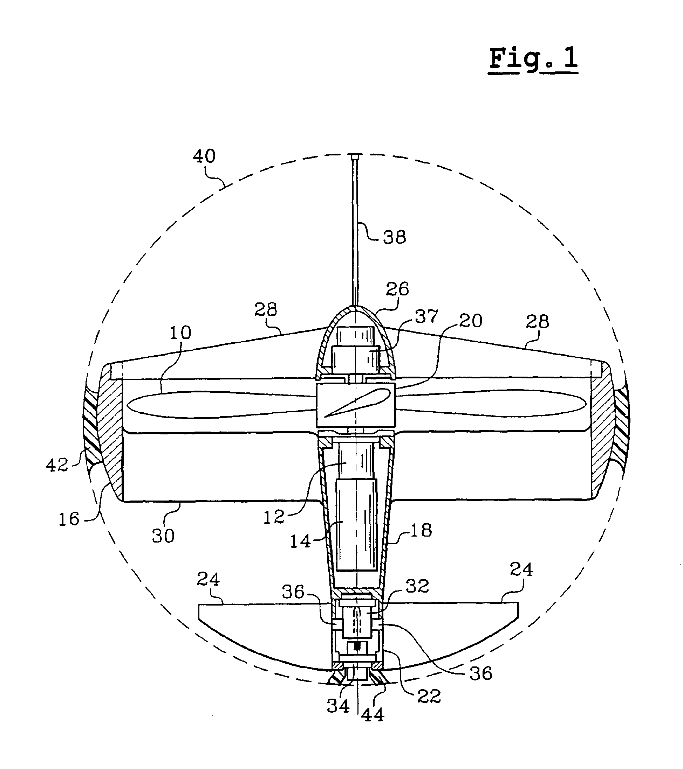

Dans l'exemple de réalisation représenté en figure 1, la référence 10 désigne une hélice d'un type quelconque (bipale, quadripale ou autre) entraînée en rotation par un moteur électrique 12 associé avantageusement à un variateur électronique de vitesse de rotation et alimenté par des accumulateurs électriques 14, l'hélice tournant à l'intérieur d'un carénage cylindrique 16 qui est coaxial à l'hélice.

Le moteur 12 et les accumulateurs électriques 14 sont agencés axialement à l'intérieur d'un fuselage 18 de forme tronconique qui s'étend du moyeu 20 de l'hélice jusqu'à l'extrémité arrière 22 de l'engin volant, qui est équipée de gouvernes 24.

Le fuselage 18 est prolongé au-delà du moyeu 20 de l'hélice par un dôme 26 en forme de demi-ellipsoïde relié au carénage 16 par des bras radiaux 28 s'étendant en avant de l'hélice. Des aubages redresseurs 30 s'étendant radialement derrière l'hélice 10, relient le carénage 16 et le fuselage 18, l'hélice 10 pouvant tourner librement entre les bras 28 et les aubages redresseurs 30.

La partie arrière 22 du fuselage est utilisée pour loger des circuits 32 de servo-commande du moteur 12, des gouvernes 24 et éventuellement des aubages redresseurs, comme on le verra plus en détail dans ce qui suit, et loge également des moyens 34 d'observation et de détection comprenant par exemple au moins une caméra vidéo, un microphone et un ou plusieurs capteurs de types divers.

Les gouvernes 24 sont dans cet exemple de réalisation formées par quatre volets répartis à 90° les uns des autres autour de l'axe de l'hélice et montés pivotants sur la partie 22 du fuselage autour d'axes 36 perpendiculaires à l'axe de l'hélice.

De façon similaire, les aubages redresseurs 30 peuvent être montés pivotants autour d'un axe perpendiculaire à l'axe de l'hélice, leur position étant ajustée pour stabiliser l'engin volant et l'empêcher de tourner autour de l'axe de l'hélice quand celle-ci est entraînée en rotation.

En variante, les aubages redresseurs sont fixes et leur inclinaison est réglée pour une vitesse nominale de rotation de l'hélice.

Le dôme 26 contient des circuits 37 de liaison radio avec des moyens au sol et comporte une antenne axiale 38, pour la transmission des informations fournies par les moyens 34 d'observation et de détection et pour la réception des signaux de commande envoyés par un opérateur au sol.

Une enveloppe 40 de forme sensiblement sphérique entoure complètement l'engin volant qui vient d'être décrit et est fixée au carénage 16 par des plots ou une bande annulaire 42 de caoutchouc, d'élastomère ou encore de mousse plastique élastiquement déformable pouvant absorber des chocs et des vibrations.

Cette enveloppe sphérique 40 est raccordée à la partie inférieure 22 du fuselage par une bague 44 du matériau précité, montée autour des moyens d'observation et de détection 34 pour les protéger des chocs.

L'enveloppe 40 est très largement ajourée et est formée par exemple d'un treillis ou d'un grillage métallique léger et résistant aux chocs, qui peut avantageusement être raccordé à l'antenne axiale 38 et former lui-même une antenne.

Dans cet ensemble, le centre de gravité de l'engin volant se trouve en-dessous du centre géométrique et au-dessus du centre de poussée aérodynamique de l'engin volant, de telle sorte que celui-ci peut occuper sur le sol une position stable correspondant à celle représentée en figure 1, l'axe de l'hélice étant vertical.

Cet engin volant est utilisable de la façon suivante :
au moyen d'une télécommande d'un type disponible dans le commerce et utilisée par exemple en aéromodélisme, un opérateur peut envoyer des ordres de pilotage qui sont captés par l'antenne 38 et éventuellement 40 et transmis aux circuits 32 de servo-commande pour commander l'entraînement de l'hélice par le moteur électrique 12 et régler sa vitesse de rotation (par l'intermédiaire du variateur électronique), régler éventuellement l'inclinaison des aubages redresseurs 30 pour éviter la mise en rotation de l'engin volant autour de l'axe de l'hélice, et commander le déplacement de l'engin volant dans une direction donnée au moyen des gouvernes 24 qui font pivoter l'engin autour de ses axes de tangage, de lacet et/ou de roulis. Des moyens décrits en détail dans ce qui suit permettent de stabiliser dynamiquement l'engin volant en limitant et en freinant ses mouvements transitoires autour de son centre de gravité, de façon à ce qu'il soit possible de les corriger, manuellement ou automatiquement.

Dans un mode de réalisation, les circuits de servo-commande 32 comprennent un ou plusieurs gyroscopes embarqués, associés à un microcalculateur embarqué ou non pour fournir des consignes de position des aubages redresseurs 30 et des gouvernes 24.

A l'aide de la télécommande, l'opérateur peut faire décoller l'engin verticalement lorsqu'il est sur le sol dans sa position d'équilibre stable correspondant à celle de la figure 1, puis il peut diriger l'engin dans une direction quelconque, pour des tâches de surveillance et d'inspection par exemple.

Les images prises par la ou les caméras vidéo faisant partie des moyens d'observation et de détection 34 sont transmises au sol par les circuits 37 de liaison radio et sont affichées sur un écran du type écran de télévision ou sur des lunettes spéciales, pour être visibles par l'opérateur qui peut ainsi piloter l'engin volant à vue comme s'il était dans cet engin. Par exemple, ces lunettes sont du type PLM-A35 ou PLM-S700 commercialisées par SONY et permettent à l'opérateur d'avoir une vision panoramique depuis l'engin volant. Lorsque l'opérateur tourne la tête, le champ de vision sur les lunettes tourne de la même façon, comme si l'opérateur était à bord de l'engin volant. Avantageusement, l'image panoramique est fournie par des barrettes de diodes photodétectrices (caméra ligne). Par un mouvement de rotation de l'engin volant autour d'un axe vertical, tout en respectant les contraintes de pilotage, on obtient une image d'une partie ou de la totalité du paysage à observer sur 360°. L'utilisation d'une caméra ligne à cet effet est connue de l'homme du métier.

L'enveloppe sphérique 40 protège l'engin volant de toute interférence avec l'environnement extérieur et protège également cet environnement des risques d'agression par l'hélice 10. Grâce à cette enveloppe 40, l'opérateur peut poser l'engin volant au sol, en le laissant tomber plus ou moins doucement d'une hauteur relativement faible, puis le faire redécoller verticalement, l'engin volant posé au sol étant automatiquement ramené dans sa position d'équilibre stable grâce à la disposition de son centre de gravité en dessous de son centre géométrique.

Dans un exemple de réalisation particulier, le diamètre extérieur de l'enveloppe 40 est de 180 à 200 millimètres, la masse de l'engin volant est de l'ordre de 350 grammes, l'hélice a un diamètre de 152 millimètres, le moteur électrique 14 et les accumulateurs fournissent une puissance motrice de l'ordre de 30 watts et une poussée de l'ordre de 4N, l'autonomie de vol est de l'ordre de 5 minutes et l'engin volant peut atteindre une altitude de plusieurs centaines de mètres.

Bien entendu, on peut faire varier assez largement les dimensions de l'engin volant, par augmentation ou diminution, et on peut également augmenter fortement son autonomie en remplaçant le moteur électrique 12 et les accumulateurs électriques 14 par un moteur thermique à piston alternatif ou à piston rotatif, associé à un réservoir de carburant, cette autonomie étant alors de quelques dizaines de minutes.

Les moyens d'observation 34 peuvent comprendre, comme déjà indiqué, au moins une caméra vidéo associée à un émetteur pour la transmission des images au sol. On trouve dans le commerce des ensembles caméra-émetteur appropriés, ayant une masse de l'ordre de 65 à 70 grammes.

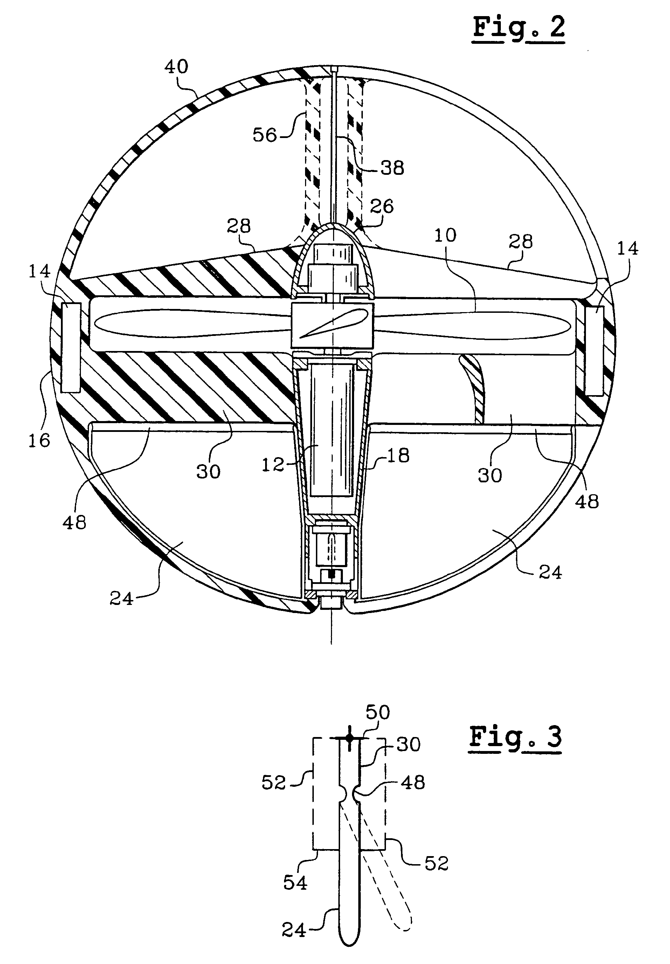

Dans une variante de réalisation représentée schématiquement aux figures 2 et 3, le carénage 16, les gouvernes 24, les bras de liaison 28, les aubages redresseurs 30 et l'enveloppe extérieure 40 sont en une matière plastique cellulaire à cellules fermées, légère et résistant aux chocs, telle par exemple qu'une mousse de polyéthylène ayant une masse volumique de l'ordre de 25 à 35 kilos par mètre cube, ou analogue.

Dans ce cas, l'enveloppe 40 n'est pas formée d'un treillis ou d'un grillage, mais de fuseaux qui s'étendent de part et d'autre d'une bande annulaire continue formant le carénage 16.

L'ensemble formé par le carénage 16, les gouvernes 24, les bras 28, les aubages 30 et l'enveloppe 40 est réalisé par moulage par injection en deux parties semi-sphériques, qui sont raccordées l'une à l'autre le long d'un plan de joint perpendiculaire à l'axe de l'hélice 10 au niveau du carénage 16, comme indiqué par exemple par la ligne en pointillés 46.

Les aubages redresseurs 30 sont fixes et prolongés vers l'arrière par des volets formant les gouvernes 24, auxquels ils sont reliés par des charnières souples formées par des amincissements locaux 48, comme représenté schématiquement en figure 3.

Le pivotement de chaque volet 24 autour de la charnière souple 48 est assuré par un servo-moteur (non représenté) logé à l'intérieur du carénage 16 ou du fuselage 18 et dont l'arbre de sortie comprend des bras en croix 50 reliés par des liens 52 à une barre transversale 54 solidaire du volet 24 et située de l'autre côté de la charnière 48 par rapport aux bras 50, de sorte que la rotation des bras 50 se traduise par un pivotement du volet 24 autour de la charnière 48, comme représenté en traits pointillés en figure 3. Ces volets 24 ont des dimensions relativement importantes et ont un rôle de surface portante lorsque l'engin vole comme un avion.

De façon générale, il est intéressant de réduire l'épaisseur, dans un plan perpendiculaire aux figures 1 et 2, des bras 28 et des aubages redresseurs 30, pour réduire les pertes de charge et donc les pertes de poussée.

Des essais ont permis de confirmer que des bras 28 ayant une forme correspondant à celle représentée aux dessins, jouent également le rôle d'aubages redresseurs, en complément des aubages 30, qui peuvent être fixes et avoir une forme en section telle que celle représentée en figure 2, pour récupérer une partie de la poussée de l'hélice et redresser l'écoulement.

En variante, les bras 28 peuvent être remplacés par des éléments filiformes faisant partie de l'enveloppe 40, ce qui réduit encore les pertes de charge et de poussée.

Dans le mode de réalisation de la figure 2, les accumulateurs électriques 14 d'alimentation du moteur 12 ne sont plus dans le fuselage 18, mais à l'intérieur du carénage 16 et répartis de façon uniforme autour de l'axe de l'engin volant.

Comme représenté en pointillés en figure 2, la matière plastique en mousse peut former un tube axial 56 en avant de l'hélice, entre L'enveloppe 40 et la partie avant 26 du fuselage, et l'antenne 38 est disposée à l'intérieur de ce tube 56.

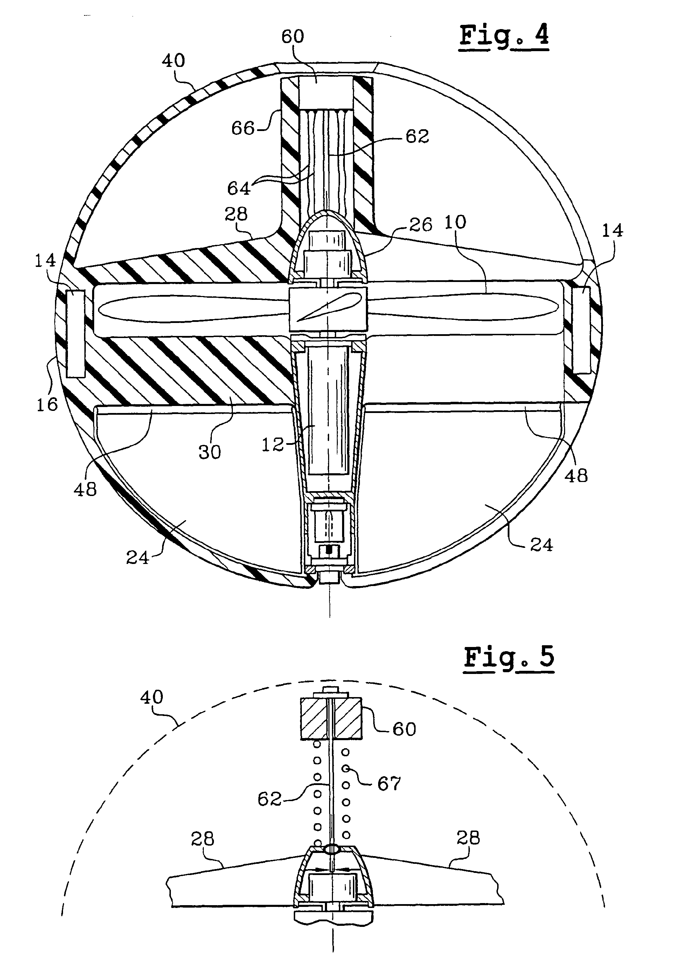

On a représenté schématiquement en figure 4 un exemple de réalisation des moyens précités de stabilisation dynamique de l'engin volant en mouvement transitoire. Dans cet exemple, qui correspond au mode de réalisation des figures 2 et 3, une masse mobile d'équilibrage 60 est montée en pendule inversé à la partie avant de l'engin, dans l'axe de l'hélice et est reliée au dôme 26 par une tige 62 formant un ressort travaillant en flexion.

Dans cette configuration, la longueur de la tige de flexion 62 est choisie telle que la distance entre son point de fixation sur le dôme 26 et le centre de gravité de la masse d'équilibrage 60 soit égale à la distance entre ce point de fixation et le centre de gravité de l'engin volant. La valeur de la masse mobile et la raideur de la tige de flexion sont déterminées puisque les oscillations de la masse mobile 60 soient synchrones et en opposition de phase avec celles de l'engin volant autour de son centre de gravité.

Ainsi, dans le cas d'une dérive angulaire qui amène l'engin volant à pivoter autour de son centre de gravité et qui est due au fait que la force de poussée, passant par le centre de poussée, est décalée angulairement par rapport à l'axe de l'engin et ne passe plus par le centre de gravité, le pivotement de la masse mobile 60 par rapport à son point de fixation sur le dôme 26 par suite des effets de l'inertie tend à limiter et à freiner le pivotement de l'engin volant autour de son centre de gravité. La dérive angulaire de l'engin volant autour de son centre de gravité est de cette façon suffisamment limitée et ralentie pour qu'on puisse la corriger, soit au moyen de la télécommande, soit de façon automatique.

Pour cela, plusieurs solutions sont possibles :
- on peut équiper l'engin volant d'une plate-forme inertielle qui va fournir des consignes de position des gouvernes 24 permettant d'annuler et de compenser la dérive angulaire de l'engin volant autour de son centre de gravité,
- un système déporté de traitement d'images reçoit les images prises par la ou les caméras vidéo de l'engin volant, y recherche des références telles que des lignes horizontales ou verticales et élabore des signaux de correction qui sont transmis aux servo-moteurs des gouvernes 24.

Des moyens d'amortissement de déplacement sont associés à la masse mobile 60. Avantageusement, celle-ci est constituée, en totalité ou en partie, par un composant de l'équipement de l'engin volant, par exemple par son récepteur radio, pour ne pas augmenter la masse embarquée. Les fils 64 reliant le récepteur radio au dôme 26 peuvent alors former les moyens d'amortissement précités ou en faire partie.

Dans une variante de réalisation, la masse mobile d'équilibrage 60 peut être montée à l'extrémité d'un tube axial 66 en une matière élastiquement déformable telle que la mousse de matière plastique qui constitue l'enveloppe 40, le carénage 16 et les bras radiaux 28. Ce tube 66 de matière élastiquement déformable peut être formé d'une pièce avec les bras radiaux 28 et remplace alors la tige de flexion 62. Les dimensions du tube 66 sont déterminées en fonction de la raideur en flexion désirée.

Dans une autre variante représentée schématiquement en figure 5, la masse mobile 60 est montée coulissante sur la tige de flexion 62 et est supportée par un ressort 67, qui est un ressort de compression dans l'exemple représenté et qui permet de faire varier la longueur du pendule inversé formé par la masse 60 et la tige 62 selon une loi du type m.γ.l = constante, m étant la masse de l'équipage mobile, γ l'accélération appliquée et 1 la longueur du pendule. Le ressort 67 permet de faire varier cette longueur automatiquement en fonction de la poussée et ainsi d'adapter automatiquement les moyens de stabilisation dynamique aux variations de la poussée. Une butée réglable à l'extrémité de la tige 62 définit une longueur maximale du pendule. Avantageusement, la tige de flexion 60 est montée sur le carénage ou sur le fuselage au moyen d'une rotule amortie, et des vis de réglage sont prévues pour définir une position initiale de la tige 62 correspondant au placement du centre de gravité de l'engin sur l'axe de poussée, ce réglage étant effectué en atelier sur un banc de test à la fin du montage de l'engin volant, pour compenser un éventuel balourd.

Dans une autre forme de réalisation, les moyens de stabilisation dynamique de l'engin volant en mouvement transitoire sont du type actif. Pour cela, des servo-moteurs sont associés au support 62 ou 66 de la masse mobile d'équilibrage 60, pour lui donner une position angulaire désirée par rapport à l'axe de l'engin volant. Ces servo-moteurs sont commandés soit par l'opérateur au moyen de la télécommande, soit automatiquement à partir d'une plate-forme inertielle ou d'un système déporté de traitement d'images, comme indiqué plus haut.

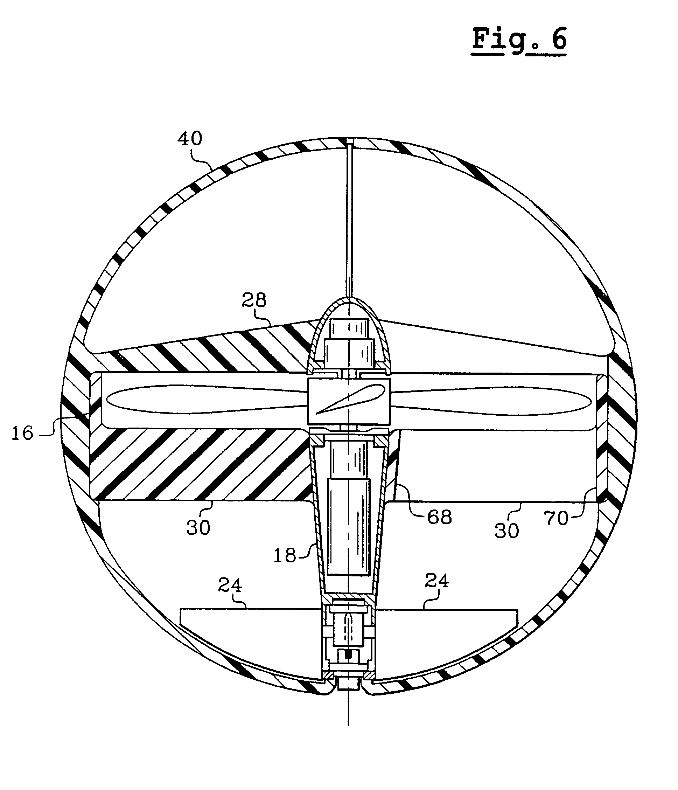

Dans la variante de réalisation représentée schématiquement en figure 6, le carénage 16 est réalisé en matériau composite, par exemple à base de fibres de carbone et comprend deux jupes cylindriques coaxiales 68 et 70 respectivement, reliées entre elles par les aubages redresseurs 30. L'enveloppe 40 peut alors être formée de deux demi-coquilles emboîtées sur le carénage 16, la demi-coquille avant comportant les bras radiaux 28 précités.

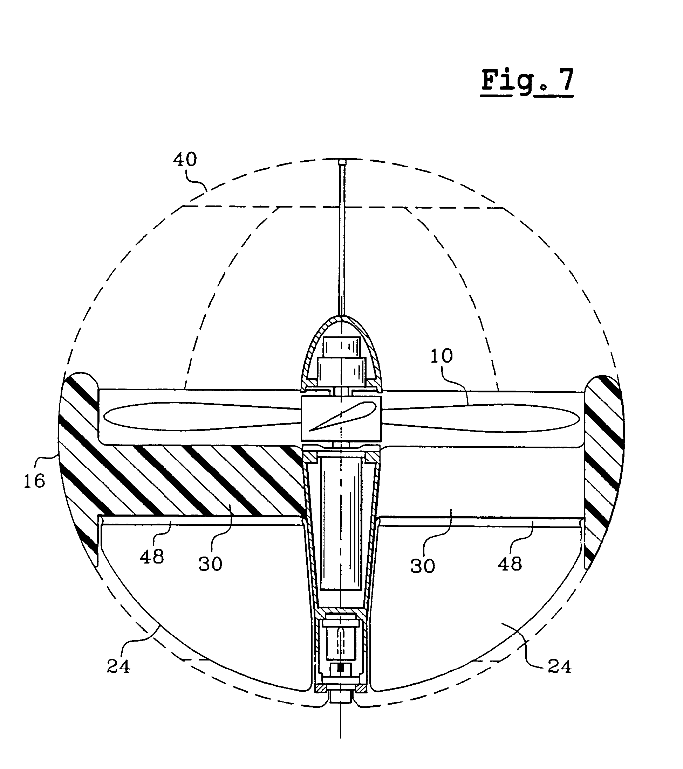

Dans la forme de réalisation de la figure 7, le carénage 16 et les aubages redresseurs 30 sont réalisés d'une seule pièce en mousse de matière plastique, éventuellement avec les volets 24 auxquels ils sont reliés par des charnières souples 48. La cage 40 est alors formée de deux coiffes sensiblement semi-sphériques en fil métallique représenté en traits pointillés, et ces coiffes sont commodément fixées par accrochage sur le carénage 16, les extrémités correspondantes des fils métalliques étant recourbées à angle droit pour former des pointes enfoncées dans la matière du carénage 16.

De façon générale, l'engin volant selon l'invention a des performances en vol qui sont tout-à-fait satisfaisantes. Lorsqu'il est équipé de moyens de stabilisation dynamique du type décrit plus haut, on peut l'utiliser aussi bien en décollage et en atterrissage vertical, en vol stationnaire et le faire avancer comme un avion. Lorsqu'il est équipé d'un moteur électrique, son autonomie est relativement faible mais il est silencieux, peut être posé en un endroit quelconque approprié et être redémarré de cet endroit, par télécommande. Lorsqu'il est équipé d'un moteur thermique, son autonomie et ses performances en vol sont supérieures, mais il est plus difficile de l'arrêter et de le faire redémarrer à distance.

## Revendications

1. Engin volant télécommandé par liaison radio, en particulier de surveillance et d'inspection, équipé de moyens (34) d'observation et/ou de détection, d'une hélice (10) à axe vertical tournant à l'intérieur d'un carénage (16) sensiblement cylindrique et d'un moteur (12) d'entraînement de l'hélice, **caractérisé en ce que** le centre de gravité de l'engin volant est situé en dessous de son centre géométrique et au dessus de son centre de poussée aérodynamique et **en ce que** l'ensemble comprenant les moyens d'observation et/ou de détection, le moteur et l'hélice est entouré d'une enveloppe extérieure (40) sensiblement sphérique ajourée et solidaire du carénage.

2. Engin volant selon la revendication 1, **caractérisé en ce que** l'enveloppe (40) est réalisée en au moins un matériau léger et résistant aux chocs.

3. Engin volant selon l'une des revendications précédentes, **caractérisé en ce qu'**au moins une partie de l'enveloppe (40) est formée d'une seule pièce avec le carénage.

4. Engin volant selon l'une des revendications précédentes, **caractérisé en ce qu'**au moins une partie de l'enveloppe (40) est en une matière plastique cellulaire à cellules fermées, telle par exemple qu'un polyéthylène.

5. Engin volant selon l'une des revendications 1 à 4, **caractérisé en ce qu'**au moins une partie de l'enveloppe (40) est métallique et comprend un grillage ou un treillis.

6. Engin volant selon l'une des revendications précédentes, **caractérisé en ce qu'**il comprend un fuselage axial (18) dont une partie arrière contient au moins le moteur (12) et les moyens (34) d'observation et/ou de détection, et des aubages redresseurs (30) s'étendant en arrière de l'hélice entre le carénage (16) et le fuselage axial (18).

7. Engin volant selon la revendication 6, **caractérisé en ce que** les aubages redresseurs (30) sont fixes ou orientables autour d'un axe perpendiculaire à l'axe de l'hélice et commandés par des servo-moteurs.

8. Engin volant selon l'une des revendications précédentes, **caractérisé en ce qu'**il comprend des gouvernes formées par des volets ou des ailerons (24) qui s'étendent en partie inférieure de l'engin à l'intérieur de ladite enveloppe et qui sont orientables autour d'axes (36) perpendiculaires à l'axe de l'hélice pour diriger l'engin par rotation autour de ses axes de tangage, de lacet et/ou de roulis.

9. Engin volant selon l'une des revendications 6 à 8, **caractérisé en ce que** le fuselage axial (18) comprend une partie avant dans laquelle sont logés des équipements tels que des moyens (37) de liaison radio, et des bras radiaux (28) reliant la partie avant du fuselage au carénage (16) en avant de l'hélice (10).

10. Engin volant selon l'une des revendications 6 à 9, **caractérisé en ce qu'**il est équipé d'un moteur thermique et d'un réservoir de carburant ou d'un moteur électrique (12) et d'accumulateurs électriques (14), le réservoir ou les accumulateurs étant logés dans le fuselage axial (18) ou portés par le carénage cylindrique (16).

11. Engin volant selon l'une des revendications 1 à 10, **caractérisé en ce qu'**il comprend des moyens de stabilisation dynamique en mouvement transitoire, comportant à l'avant de l'engin une masse mobile d'équilibrage montée en pendule inversé sur l'axe de l'hélice, des moyens élastiquement déformables de rappel de la masse mobile et des moyens d'amortissement de déplacement de la masse mobile.

12. Engin volant selon la revendication 11, **caractérisé en que** la longueur du pendule inversé est variable en fonction de l'accélération, la masse mobile étant par exemple montée coulissante le long d'une tige de flexion qui la relie à l'engin et étant supportée par un ressort réglant la position de la masse mobile sur ladite tige en fonction de l'accélération.

13. Engin volant selon la revendication 11, **caractérisé en ce qu'**il comprend des servo-moteurs de déplacement de la masse mobile, commandés par un opérateur.

14. Engin volant selon la revendication 11, **caractérisé en ce que** lesdits moyens de stabilisation dynamique sont commandés automatiquement au moyen d'une plate-forme inertielle embarquée ou d'un système de traitement d'image déporté, permettant d'obtenir des références, par exemple verticales, à partir d'images transmises par l'engin volant.

## Claims

1. An aircraft remote controlled by radio transmission, in particular for surveillance and inspection, provided with observation and/or detection means (34), a propeller (10) with a vertical axis rotating inside a substantially cylindrical fairing (16) and an engine (12) powering the propeller, **characterized in that** the centre of gravity of the aircraft is located below its geometrical centre and above its centre of aerodynamic thrust and **in that** the assembly comprising the detection and/or observation means, the engine and the propeller is surrounded by a substantially spherical open-worked outer cage (40) that is integral with the fairing.

2. An aircraft according to claim 1, **characterized in that** the cage (4) is formed from at least one material that is light and shock resistant.

3. An aircraft according to one of the preceding claims, **characterized in that** at least a portion of the cage (40) is formed as a single piece with the fairing.

4. An aircraft according to one of the preceding claims, **characterized in that** at least a portion of the cage (40) is formed from a closed cell plastics material such as a polyethylene foam.

5. An aircraft according to one of claims 1 to 4, **characterized in that** at least a portion of the cage (40) is metallic and comprises a grill or screen.

6. An aircraft according to one of the preceding claims, **characterized in that** it comprises an axial fuselage (18) the aft portion of which contains at least one engine (12) and the observation and/or detection means (34), and redressing vanes (30) extending aft of the propeller between the fairing (16) and the axial fuselage (18).

7. An aircraft according to claim 6, **characterized in that** said redressing vanes (30) are fixed or can be orientated about an axis perpendicular to the axis of the propeller and controlled by servo-motors.

8. An aircraft according to one of the preceding claims, **characterized in that** it comprises control surfaces formed by flaps or ailerons (24) which extend in the lower portion of the aircraft inside said cage and which can be orientated about axes (36) perpendicular to the axis of the propeller to direct the aircraft by rotation about its pitch, yaw and/or roll axes.

9. An aircraft according to one of claims 6 to 8, **characterized in that** the axial fuselage (18) comprises a forward portion in which equipment such as radio connection means (37) are housed, and radial arms (28) connecting the forward portion of the fuselage to the fairing (16) forward of the propeller (10).

10. An aircraft according to one of claims 6 to 9, **characterized in that** it is equipped with a heat engine and a fuel tank or with an electric motor (12) and storage batteries (14), the tank or storage batteries being housed in the axial fuselage (18) or carried by the cylindrical fairing (16).

11. An aircraft according to one of claims 1 to 10, **characterized in that** it comprises means for dynamic stabilisation of the aircraft in transitional motion comprising, forward of the aircraft, a mobile mass-balance weight mounted as an inverted pendulum on the axis of the propeller, elastically deformable return means for the mobile weight and means for dampening the displacement of said mobile mass.

12. An aircraft according to claim 11, **characterized in that** the length of the inverted pendulum varies as a function of the acceleration, the mobile mass being slidably mounted on a bendable rod, for example, which connects to the aircraft and is supported by a spring regulating the position of the mobile weight on said rod as a function of the acceleration.

13. An aircraft according to claim 11, **characterized in that** it comprises servo-motors for displacing the mobile weight, controlled by the operator.

14. An aircraft according to claim 11, **characterized in that** said dynamic stabilisation means are automatically controlled by an onboard inertial navigation platform or by a remote image treatment system that can produce references, for example vertical references, from images transmitted by the aircraft.

## Patentansprüche

1. Fluggerät, das durch eine Funkverbindung ferngesteuert ist, insbesondere zur Überwachung oder zur Untersuchung, welches mit einer Einrichtung (34) zur Überwachung und/oder zur Erfassung, einem Propeller (10) auf einer vertikalen Achse, der im Inneren einer im Wesentlichen zylindrischen Abdeckung (16) dreht, und einem Motor (12) zum Antrieb des Propellers versehen ist, **gekennzeichnet dadurch, dass** der Schwerpunkt des Fluggerätes unterhalb seines geometrischen Mittelpunktes und oberhalb seines aerodynamischen Druckmittelpunktes gelegen ist, und **dadurch**, dass die die Einrichtung zur Überwachung und/oder zur Erfassung, den Motor und den Propeller umfassende Einheit von einer im Wesentlichen sphärischen, durchbrochenen und mit der Abdeckung einstückigen äußeren Verkleidung (40) umgeben ist.

2. Fluggerät nach Anspruch 1, **dadurch gekennzeichnet, dass** die Verkleidung (40) aus wenigstens einem leichten und schlagfesten Material verwirklicht ist.

3. Fluggerät nach einem der vorhergehenden Ansprüche, **dadurch gekennzeichnet, dass** wenigstens ein Teil der Verkleidung (40) aus einem einzigen Stück mit der Abdeckung gebildet ist.

4. Fluggerät nach einem der vorhergehenden Ansprüche, **dadurch gekennzeichnet, dass** wenigstens ein Teil der Verkleidung (40) aus einem porösen Material mit geschlossenen Zellen, wie zum Beispiel Polyethylen, besteht.

5. Fluggerät nach einem der Ansprüche 1 bis 4, **dadurch gekennzeichnet, dass** wenigstens ein Teil der Verkleidung (40) aus Metall besteht und ein Gitter oder ein Geflecht umfasst.

6. Fluggerät nach einem der vorhergehenden Ansprüche, **dadurch gekennzeichnet, dass** es einen axialen Rumpf (18), dessen hinterer Teil wenigstens den Motor (12) und die Einrichtung (34) zur Überwachung und/oder zur Erfassung aufweist, und Leitschaufeln (30), die sich hinter dem Propeller zwischen der Abdeckung (16) und dem axialen Rumpf (18) erstrecken, umfasst.

7. Fluggerät nach Anspruch 6, **dadurch gekennzeichnet, dass** die Leitschaufeln (30) feststehend oder um eine Achse senkrecht zu der Achse des Propellers ausrichtbar und durch Servomotoren gesteuert sind.

8. Fluggerät nach einem der vorhergehenden Ansprüche, **dadurch gekennzeichnet, dass** es durch Flügelklappen oder Querruder (24) gebildete Steuerflächen, die sich teilweise unterhalb von dem Gerät im Inneren der Verkleidung erstrecken und die um Achsen (36) senkrecht zu der Achse des Propellers zum Lenken des Gerätes durch Drehung um dessen Nick-, Gier- und/oder Längsachsen ausrichtbar sind, umfasst.

9. Fluggerät nach einem der Ansprüche 6 bis 8, **dadurch gekennzeichnet, dass** der axiale Rumpf (18) einen vorderen Teil darin, in dem Fremdausrüstungen, wie eine Einrichtung (37) zur Funkverbindung, und radiale Stützrippen (28), die den vorderen Teil des Rumpfes mit der Abdeckung (16) vor dem Propeller (10) verbinden, umfasst.

10. Fluggerät nach einem der Ansprüche 6 bis 9, **dadurch gekennzeichnet, dass** es mit einem Verbrennungsmotor und einem Kraftstoffbehälter oder einem Elektromotor (12) und elektrischen Akkumulatoren (14) ausgestattet ist, wobei der Behälter oder die Akkumulatoren in dem axialen Rumpf (18) untergebracht oder durch die zylindrische Abdeckung (16) gehalten sind.

11. Fluggerät nach einem der Ansprüche 1 bis 10, **dadurch gekennzeichnet, dass** es eine Einrichtung zur dynamischen Stabilisierung bei einer Übergangsbewegung, die im vorderen Bereich des Gerätes eine Schwungmasse zum Gleichgewicht, welche an einem Umkehrpendel an der Achse des Propellers montiert ist, eine elastisch verformbare Einrichtung zum Zurückbewegen der Schwungmasse und eine Einrichtung zur Dämpfung der Bewegung der Schwungmasse umfasst.

12. Fluggerät nach Anspruch 11, **dadurch gekennzeichnet, dass** die Länge des Umkehrpendels in Abhängigkeit von der Geschwindigkeit variierbar ist, wobei die Schwungmasse zum Beispiel längs einer Federstange, welche sie mit dem Gerät verbindet, verschiebbar angebracht ist und durch eine Federkraft, welche die Position der Schwungmasse an dieser Stange in Abhängigkeit von der Geschwindigkeit regelt, abgestützt ist.

13. Fluggerät nach Anspruch 11, **dadurch gekennzeichnet, dass** es Servomotoren zum Verschieben der Schwungmasse, die durch einen Operator gesteuert sind, umfasst.

14. Fluggerät nach Anspruch 11, **dadurch gekennzeichnet, dass** die Einrichtung zur dynamischen Stabilisierung mittels einer im Fluggerät befindlichen Trägheitsplattform oder einem System zur Verarbeitung eines verschobenen Bildes, um den Erhalt von, zum Beispiel vertikalen, Bezugspunkten, ausgehend von durch das Fluggerät übertragenen Bildern, zu ermöglichen, automatisch gesteuert ist.
